(19) **Europäisches Patentamt**

**European Patent Office**

**Office européen des brevets**

(11) **EP 1 612 927 A1**

(12) **EUROPEAN PATENT APPLICATION**
published in accordance with Art. 158(3) EPC

(43) Date of publication:
04.01.2006 Bulletin 2006/01

(51) Int Cl.:
*H02P 6/18* (1995.01)

(21) Application number: 04725151.7

(22) Date of filing: 01.04.2004

(86) International application number:
**PCT/JP2004/004763**

(87) International publication number:
**WO 2004/091089 (21.10.2004 Gazette 2004/43)**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **04.04.2003 JP 2003101195**

(71) Applicants:
• **NSK Ltd.**
**Shinagawa-ku,**
**Tokyo 141-8560 (JP)**
• **NSK Steering Systems Co. Ltd**
**Shinagawa-ku,**
**Tokyo 141-8560 (JP)**

(72) Inventors:
• **TA, CaoMinh**
**Maebashi-shi,**
**Gunma 371-8527 (JP)**
• **JIANG, ChunHao**
**Maebashi-shi,**
**Gunma 371-8527 (JP)**
• **KOBAYASHI, Hideyuki**
**Maebashi-shi,**
**Gunma 371-8527 (JP)**

(74) Representative: **Hooiveld, Arjen Jan Winfried et al**
**Arnold & Siedsma**
**Sweelinckplein 1**
**2517 GK Den Haag (NL)**

(54) **MOTOR-DRIVE CONTROL DEVICE AND ELECTRIC POWER STEERING DEVICE USING THE SAME**

(57) In order to precisely control rotation of a motor, it is necessary to precisely detect a position of a rotor. Even if an inexpensive position detecting sensor having relatively low precision such as a Hall sensor is used, it is possible to provide a motor drive control apparatus capable of precisely detecting the position of the rotor by calculating an electrical angle of the rotor (rotor position) by calculating a back-EMF from a detected voltage, detected motor current, a motor winding resistance value and an inductance value, and by periodically correcting a calculation error of the calculated electrical angle. If such a motor drive control apparatus is used, it is possible to provide an inexpensive electric power steering apparatus having excellent steering feeling.

FIG.8

**Description**

Technical Field

The present invention relates to an improvement of a drive control apparatus of a motor used for an electric power steering apparatus, and to the electric power steering apparatus using the motor drive control apparatus.

Background Technique

As a conventional drive control method of a motor used for an electric power steering apparatus, e. g. , in a conventional drive control method of a brushless DC motor, there is employed a control method in which a rotating magnetic field is generated from a motor drive control apparatus through an inverter based on a rotation position of a rotor, and the rotation of the rotor is controlled. That is, according to this control method, energization of a plurality of energizing coils disposed in a state at predetermined angles in succession by a control unit in accordance with a rotor position, thereby to control the rotation of the rotor.

Vector control which is frequently used as the drive control method of the brushless DC motor is disclosed in a Japanese Patent document (Japanese Patent Application Laid-open No. 2001-18822 A) for example. FIG.1 is a circuit diagram showing the drive control method of a motor 56 used for the electric power steering apparatus.

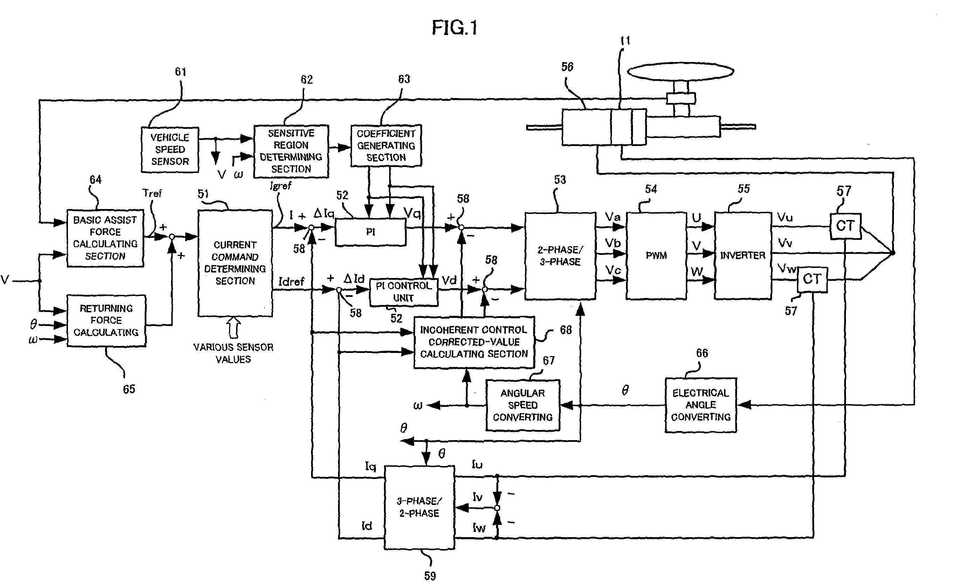

In FIG.1, a main path of a command signal extends from a current command determining section 51 which determines a motor control command value to a motor 56 through PI control sections 52, a 2-phase/3-phase coordinate converting section 53, a PWM control section 54 and an inverter 55. Current sensors 57 are disposed between the inverter 55 and the motor 56. Signals detected by the current sensors 57 are respectively feedbacked to subtracters 58 disposed between the current command determining section 51 and the PI control sections 52 through a feedback path. A 3-phase/2-phase coordinate converting section 59 is disposed in the feedback path.

According to the above control system, in the current command determining section 51, a torque command value Tref calculated from a torque signal detected by the torque sensor, an electrical angle $\theta$ and an electrical angular speed $\omega$ indicative of a rotor position detected by the position detecting sensor 11 are received, and current command values Idref and Iqref are determined. The current command values Idref and Iqref are detected by the current sensors 57, respectively and then, corrected by feedback currents converted into 2-phase at the 3-phase/2-phase coordinate converting section 59 in the feedback path. That is, errors between the feedback currents Id and Iq and the current command values Idref and Iqref are calculated at the subtracters 58. Then, signals indicative of duty of PWM control are calculated as command values Vd and Vq in forms of d-component and q-component, and the d-component and q-component are reversely converted into command values Va, Vb and Vc of phase components at the 2-phase/3-phase coordinate converting section 53. The inverter 55 is PWM-controlled based on the command values Va, Vc and Vc, inverter current is supplied to the motor 56, and the inverter 55 controls the rotation of the motor 56.

A reference numeral 61 represents a vehicle speed sensor, a reference numeral 62 represents a sensitive region determining section, a reference numeral 63 represents a coefficient generating section, a reference numeral 64 represents a basic assist force calculating section, a reference numeral 65 represents a returning force calculating section, a reference numeral 66 represents an electrical angle converting section, a reference numeral 67 represents an angular speed converting section, and a reference numeral 68 represents an incoherent control corrected-value calculating section.

In the case of the vector control, the current command values Idref and Iqref are determined based on the torque command value Tref, the electrical angle (rotor position) $\theta$ and the electrical angular speed $\omega$. Further, feedback currents Iu, Iv and Iw of the motor 56 are converted into 2-phase currents Id and Iq and then, errors between the 2-phase currents Id and Iq and the current command values Idref and Iqref are calculated, and the errors perform the current control by PI control, thereby to obtain the command values Vd and Vq for the inverter 55. Then, the command values Vd and Vq are reversely converted into the 3-phase command values Va, Vb and Vc, the inverter 55 is controlled and the rotation of the motor 56 is controlled.

When such a vector control is used, if the motor 56 is controlled in a state in which a rotor position $\theta$ cannot be detected precisely, the torque ripple of the motor 56 becomes large, unfavorable phenomenon is generated, for example, a driver may feel a sense of disharmony such as vibration in steering operation of a steering wheel as the electric power steering apparatus, and a motor noise is increased. For this reason, to precisely detect the rotor position $\theta$, it is necessary to use a resolver or an encoder which is expensive but have high detection precision, as the position detecting sensor 11 as described in a Japanese Patent document (Japanese Patent Application Laid-open No.2001-187578 A).

There is an example in which a motor is controlled using a Hall sensor which is an inexpensive position detecting sensor. As disclosed in a Japanese Patent document (Japanese Patent Application Laid-open No.2002-272163 A) for example, a signal of the Hall sensor is used for correcting a starting point or an intermediate point of a phase which generates sine wave used for the motor PWM-control. In this example, however, a rotation angle $\theta$ of the rotor in an intermediate section before a next Hall sensor signal is obtained is not calculated, and this is insufficient as a detector that can be used for detecting the rotor position unlike the encoder or resolver.

Even with a detector having excellent detection precision such as the encoder, if the rotation speed of the rotor is reduced, there is a problem that detection points obtained from the encoder are reduced and the position detecting precision of the rotor is deteriorated. Hence, an attempt is made to improve the precision deterioration using an inertia moment of motor load and a motor current as disclosed in a dissertation (Seung Ho Song, "An Instantaneous Speed Observer for Low speed Control of ac Machine", academic magazine "IEEE application power electronics (IEEE APEC '98)", pages 581-586). However, there exists an integration until the angular speed $\omega$ is calculated from the angular acceleration obtained based on the inertia moment and the motor current, and there also exists an integration until the electrical angle $\theta$ of the rotor is calculated from the angular speed $\omega$. Since the integration is used two times, the calculation precision is inferior, and it is difficult to precisely determine the inertia moment of the load under which the motor is driven, there is a problem that the apparatus is put to practical use.

A temperature change of the motor is one element that increases the torque ripple of the motor. That is, when the electrical angle $\theta$ of the rotor is calculated, if the rotor position estimating circuit which uses a counter electromotive voltage (back-EMF) of the motor is utilized, resistance of the motor and a value of inductance used for calculating the back-EMF are change in accordance with the temperature change. Therefore, if the resistance or the like caused by the temperature change is not corrected, the electrical angle $\theta$ of the rotor cannot be calculated precisely, and there is a problem that the torque ripple is increased. A Japanese Patent document (the specification of Japanese Patent No.3104865 B2) discloses an example of resistance calculation of a motor in which the temperature change is taken into consideration. In this publication, special conditions such as one in which the rotation speed of the motor is zero are required.

To control the motor using the vector control, it is necessary to precisely detect the rotor position of the motor, but since the resolver or the encoder having excellent detection precision is expensive, this causes a bottleneck for inexpensively producing an electric power steering apparatus. There is a problem that even if a high precision rotor position detecting sensor such as the resolver or the encoder is used, the rotor position cannot be detected precisely in a low rotation speed region of the motor. There is also a problem that the detection precision of the rotor position is deteriorated by the temperature change of the motor.

The present invention has been accomplished in view of the above circumstances, and it is an object of the present invention to provide a motor drive control apparatus having a rotor position estimating section capable of precisely calculating a rotor position even if an inexpensive rotor position detecting sensor is used, or even in a low rotation speed region, or even if the temperature of the motor is changed.

It is another object of the present invention to provide an inexpensive electric power steering apparatus having no sense of disharmony even if a steering wheel is abruptly steered in case of emergency by using a motor drive control apparatus having a precisely calculated rotor position and by properly vector-controlling the motor.

Disclosure of the Invention

The present invention relates to a motor drive control apparatus of a brushless DC motor and an electric power steering apparatus. The object of the present invention is achieved by providing a motor drive control apparatus comprising a voltage detecting section for detecting phase voltages or line voltages of a brushless DC motor having three or more phases, a current detecting section for detecting a motor current of the motor, a back-EMF detecting section for each phase for calculating a back-EMF of each phase of the motor from the phase voltages or line voltages, the motor current, the winding resistance value and winding inductance value, an angular speed calculating section which detects a back-EMF which becomes a maximum value in the back-EMF of each phase, and which calculates an angular speed $\omega$ of a rotor of the motor, and a rotor position estimating section for estimating an electrical angle $\theta$ of the rotor from the angular speed $\omega$.

The above object of the present invention is more effectively achieved by providing the motor drive control apparatus comprising: a rotor position detecting sensor for detecting an electrical angle $\theta_0$ of the rotor of the motor in a discrete manner, and a rotor position estimating section for correcting the calculated electrical angle $\theta$ of the rotor by the detected electrical angle $\theta_0$ of the rotor; a rotor position estimating section for estimating a resistance change amount $\Delta R$ caused by temperature change of the winding resistance from an error $\Delta \theta$ between the calculated electrical angle $\theta$ and the detected electrical angle $\theta_0$; a rotor position estimating section for estimating a temperature change amount $\Delta T$ of the winding from the resistance change amount $\Delta R$; a rotor position estimating section for correcting the calculated electrical angle $\theta$ of the rotor using the temperature change amount $\Delta T$ or the resistance change amount $\Delta R$; and a rotor position estimating section in which a low pass filter is disposed in an input or output of the current detecting section.

Brief Description of the Drawings

FIG. 1 is a control block diagram showing the entire vector control apparatus of a motor using an electrical angle $\theta$ detected by a conventional resolver or encoder.

FIG.2 is a diagram showing a principle for calculating back-EMFs ea, eb and ec used for calculating an electrical angle $\theta$ of a rotor in the present invention.

FIG.3 is a diagram showing a principle for electrical angular speed $\omega$ of a rotor from the back-EMFs ea, eb and ec in the present invention.

FIG.4 is a diagram showing a calculation result of the electrical angle $\theta$ according to a first invention theory.

FIG.5 is a diagram showing a calculation result of the electrical angle $\theta$ according to a second invention theory.

FIG.6 is a diagram showing a calculation result of the electrical angle $\theta$ according to a third invention theory.

FIG.7 is a control block diagram of a motor drive control apparatus to which the present invention is applied.

FIG.8 is a control block diagram for calculating the electrical angle $\theta$ which is an embodiment according to the first and second invention theories.

FIG.9 is a control block diagram for calculating the electrical angle $\theta$ which is an embodiment according to the third and fourth invention theories.

FIG.10 is a control block diagram showing a modification of the present invention.

FIG.11 is a control block diagram of the first invention theory using the line voltages of the motor.

Best Mode for Carrying Out the Invention

The present invention comprises four invention theories, and outlines thereof will be explained.

According to a first invention theory, a voltage and a current of a motor are detected, a back-EMF of each phase is calculated from the voltage value, the current value, the winding resistance R and the winding inductance L of the motor, and an angular speed $\omega$ and an electrical angle $\theta$ of a rotor are calculated from the back-EMF value.

According to a second invention theory, when there is a calculation error in the electrical angle $\theta$ calculated in the first invention theory, the error is cumulated, the error of the calculated electrical angle $\theta$ becomes excessively large, and this is not suitable for practical use. However, since several rotor phase detecting sensors such as Hall sensors capable of detecting the electrical angle of the rotor are mounted on the motor, it is possible to correct the electrical angle $\theta$ calculated in the first invention theory by the electrical angles $\theta_0$ detected by the several Hall sensors. Since the error is reset whenever the electrical angle $\theta$ is corrected, the error is not cumulated. For example, if there are three Hall sensors and the motor has four poles, six electrical angles $\theta_0$, i.e., 0°, 60°, 120°, 180°, 240° and 300° can be detected. Although the electrical angles $\theta_0$ cannot be detected continuously, the angles can be detected every 60° in a discrete manner. If the calculated electrical angle $\theta$ is 65° when the detected electrical angle $\theta_0$ is 60°, this means that the calculation errors are generated five times in a section corresponding to the 60°, but when the electrical angle $\theta$ is calculated in the next section from 60° to 120°, 60° is substituted into the initial value of the electrical angle $\theta$ instead of 65°, the electrical angle $\theta$ is newly calculated and with this, it is possible to prevent the error from being cumulated.

A third invention theory improves the second invention theory. In the second invention theory, the electrical angles $\theta_0$ detected by the Hall sensors cannot be obtained continuously, the electrical angles $\theta_0$ can be obtained every 60° for example in the discrete manner. Therefore, it is possible to correct the electrical angle $\theta$ every 60° but an error generated therebetween, e.g., between 0° to 60° cannot be corrected. According to the third invention theory, an error of the electrical angle $\theta$ in this section is generated also by the detection error of the current or voltage, or by change of the inductance value, but one that is most affected is error caused by change in resistance caused by the temperature change of a motor winding. Hence, the change amount of the winding resistance value is calculated, the change amount of the resistance is corrected to the winding resistance R of the first invention theory in a feedback manner, the electrical angle $\theta$ is calculated, and an error of the electrical angle calculated in the third invention theory can be reduced as compared with that of the electrical angle generated in the second invention theory.

According to the first invention theory, a change amount of temperature which is reversely varied, from a change amount of the winding resistance caused by the temperature change obtained in the third invention theory.

The outline of the present invention will be explained. Next, the present invention will be explained theoretically and then, each embodiment will be explained.

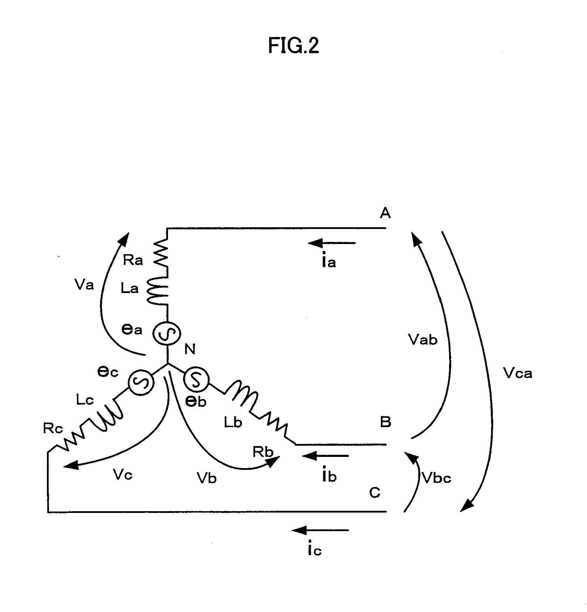

The first theory of the invention will be explained using FIG. 2. In the following description, an example in which phase voltages Va, Vb and Vc are detected as motor voltage will be explained, but this theory is established even if the voltage is line voltages Vab, Vbc and Vca. A case in which the voltage is phase voltages and a case in which the voltages are line voltages will be explained in the later-described embodiments. Motor currents ia, ib and ic are also detected other than voltage. Winding resistances Ra, Rb and Rc, and inductances La, Lb and Lc of the motor which are not detected can be obtained from the motor characteristics. A relation between these values and the back-EMFs ea, eb and ec in each phase are as follows:

$$ea = Va - (Ra + s \cdot La)ia$$
$$eb = Vb - (Rb + s \cdot Lb)ib \qquad \cdots (1)$$
$$ec = Vc - (Rc + s \cdot Lc)ic$$

wherein, "s" represents Laplace operator, here, differential operator (d/dt).

The calculation of the rotor angular speed $\omega$ will be explained. Generally, a relation between the angular speed $\omega$ and the back-EMF "e" of the motor is as follows:

$$e = Ke \cdot \omega$$

wherein, Ke represents a back-EMF constant [V/(rad/s)] of the motor.

However, this equation is an equation for a brush motor, and in the case of a brushless motor having no commutator, it is necessary to rectify the back-EMFs ea, eb and ec. In the case of control of trapezoidal wave current and rectangular wave current, to rectify is to have a maximum value. If this is expressed in an equation, it will be as follows:

$$\omega = 2 \times \{max(|ea|, |eb|, |ec|)\} / Ke \qquad \cdots (2)$$

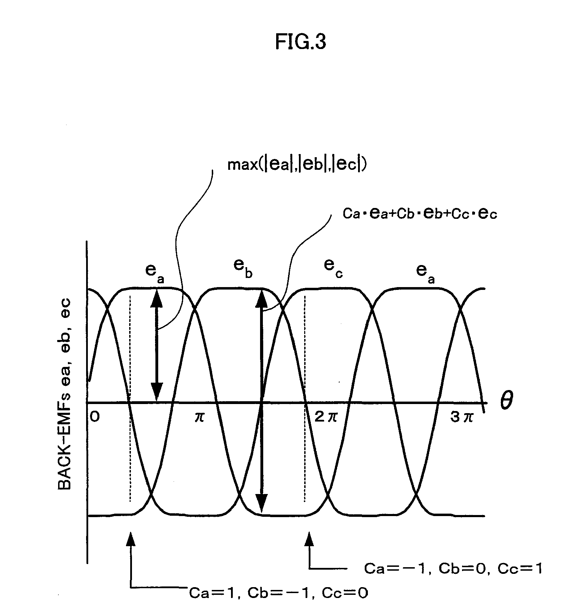

Waveforms of the back-EMFs ea, eb and ec are shown in FIG. 3. To rectify is to obtain an envelope curve of the back-EMFs ea, eb and ec, i.e., a maximum value. The reason why the numerator of the equation (2) is multiplied by two is that a negative value is superimposed on the side of positive value by employing absolute values of the back-EMFs ea, eb and ec.

Next, the electrical angle $\theta$ can be obtained from a following equation (3).

$$\theta = \theta_i + \int \omega \, dt \qquad \cdots (3)$$

wherein, $\theta_i$ is an initial value in an integration section.

If the above equation (3) is subjected to a concrete digital processing, it can be calculated in the following manner.

$$\theta = \theta_i + n \cdot \omega \cdot Ts$$

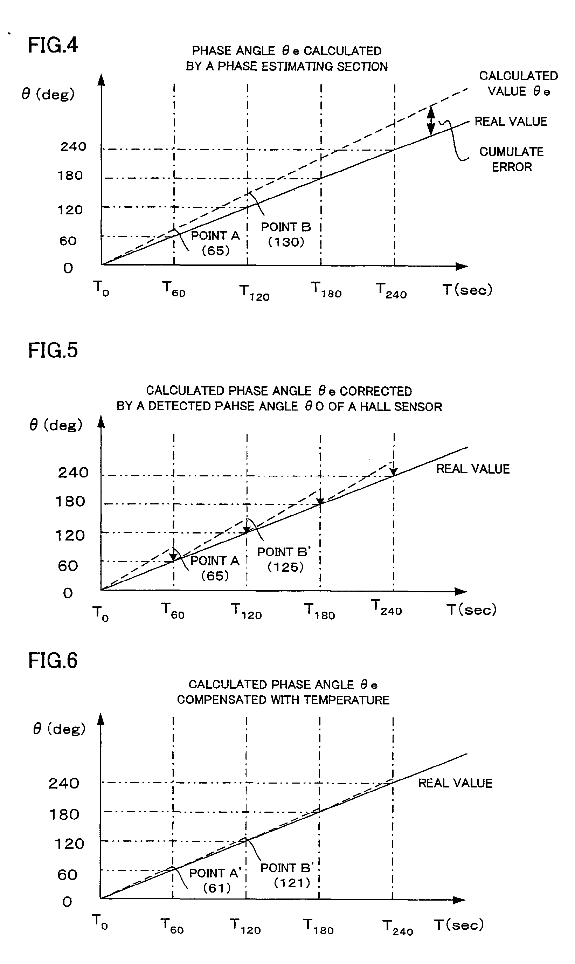

wherein, "n" represents a value obtained by dividing a time $\Delta Ts$ by sampling time Ts, the time $\Delta Ts$ represents a time for waiting a next Hall sensor signal, and in FIGs.4 to 6, $\Delta Ts = T_{120} - T_{60}$. Therefore, "n = $\Delta Ts/Ts$" is established.

With the above theory, the electrical angle $\theta$ can be obtained.

Next, the second theory of the invention will be explained using FIGs.4 and 5.

FIG. 4 shows the electrical angle $\theta$ calculated by the first invention theory. It is apparent that as time is elapsed after calculation error is generated, the error is cumulated. A real value of the error amount is 60° at a time $T_{60}$, the calculated value $\theta$ is 65°. This means that the errors were generated five times between times To and $T_{60}$. At a time $T_{120}$, the error is cumulated and becomes 10°, and the calculated electrical angle $\theta$ is more separated from the real value. If three Hall sensors are mounted on the four-pole motor, since the electrical angles $\theta_0$ can be detected every 60°, the calculated electrical angle $\theta$ can be corrected. FIG. 5 shows this correction. The electrical angle $\theta$ becomes 65° at the time $T_{60}$ in the first invention theory, but this is corrected to 60° by the electrical angles $\theta_0$.

That is, the angle $\theta_0 = 60°$ is substituted into the initial value $\theta_i$ and corrected, and the electrical angle $\theta$ is

calculated as expressed in the following equation (4).

$$\theta = \theta_0 + \int_{T_{60}}^{T_{120}} \omega e \, dt \qquad \cdots \ (4)$$

Therefore, since the calculation is carried out while 60° instead of 65° is used as the initial value $\theta_i$ of the electrical angle $\theta$ in the section between the times $T_{60}$ and $T_{120}$, the error is not cumulated. For example, at the time $T_{120}$, the electrical angle $\theta$ is 130° in the first invention theory, but if the second invention theory is used, the electrical angle $\theta$ is 125° and the error is not cumulated.

The third invention theory will be explained using FIGs.5 and 6. The electrical angle $\theta$ can be corrected every 60° using the detected value of the Hall sensor according to the second invention theory, but during that time, the error of the electrical angle $\theta$ is cumulated. It is an object of the third invention theory to improve the error of the electrical angle during that time. Its theory is based on an assumption that an error of the calculated electrical angle $\theta$ is caused when the temperature of the winding rises and the winding resistance R is changed from the value used in the first invention theory. An angular speed error $\Delta\omega$ is obtained from an electrical angle error $\Delta\theta$, a back-EMF error $\Delta e$ is obtained from the angular speed error $\Delta\omega$, and a resistance change amount $\Delta Rm$ (m = a, b, c) of the winding resistance is obtained from the back-EMF error $\Delta e$. Then, the winding resistance Rm of the first invention theory is replaced by "Rm + $\Delta Rm$" and corrected using the winding resistance Rm, and the electrical angle $\theta$ is calculated using the winding resistance Rm.

These contents can be expressed as in the following equation (5).

$$\Delta\theta = \theta - \theta_0 \qquad \cdots \ (5)$$

The electrical angle error $\Delta\theta$ is obtained from the above equation (5).

Next, the angular speed error $\Delta\omega$ is obtained using the following equation (6).

$$\Delta\theta = n \cdot Ts \cdot \Delta\omega \qquad \cdots \ (6)$$

wherein, "n" represents a value obtained by dividing a Hall sensor signal waiting time $\Delta Ts$ with the sampling time Ts, and "n = $\Delta Ts/Ts$" is established.

Next, the back-EMF error $\Delta e$ is obtained from the following equation (7).

$$\Delta e = \Delta\omega \cdot Ke/2 \qquad \cdots \ (7)$$

Then, the resistance change amount $\Delta Rm$ is obtained from the following equation (8).

$$\Delta Rm = \Delta e/i_m \qquad \cdots \ (8)$$

wherein, m = a, b, C.

With respect to motor winding resistance Rm (old) before the resistance error is corrected, a precise winding resistance Rm (new) in which obtained resistance error $\Delta Rm$ is taken into consideration is obtained from the following equation (9).

$$Rm \ (new) = Rm \ (old) + \Delta Rm \qquad \cdots \ (9)$$

If the winding resistances Ra, Rb and Rc obtained by the above equation (9) is substituted into the equation (1) of the first invention theory and the electrical angle $\theta$ which is the second invention theory is corrected by the electrical

angles $\theta_0$ detected every 60°, results thereof are as shown in FIG.6 for example. That is, at the time $T_{60}$, the electrical angle $\theta$ of the second invention theory is 65°, and the error of the electrical angle is 5°, but if the third invention theory is improved, the electrical angle $\theta$ becomes 61°, and the electrical angle error $\Delta\theta$ is reduced to 1°. The reason why the error of 1° remains is that the temperature change is caused by not only the winding resistance strictly, but also by the errors of detected voltage and detected current.

Concerning the fourth invention theory, the temperature coefficient $\alpha$ ($\Omega/$°C) of the motor is known from material, shape and the like and thus, the temperature change amount $\Delta T$ of the winding resistance can be obtained by the following equation (10).

$$\Delta T \;=\; \Delta R/a \qquad\qquad \cdot\cdot\cdot (10)$$

The above description is the theoretical explanation of the present invention. Preferred embodiments of the present invention will be explained in detail based on the figures.

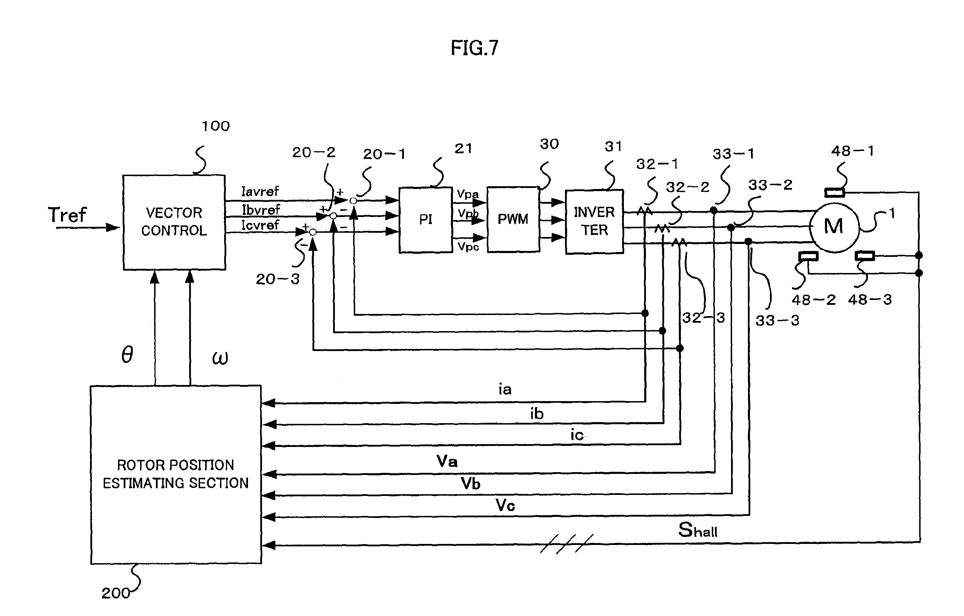

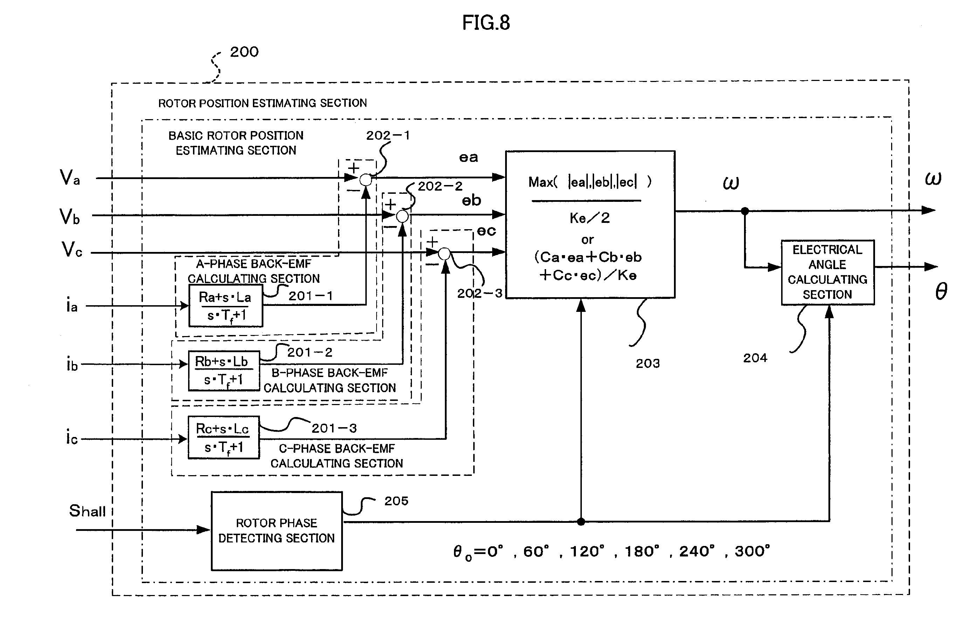

Embodiments of the first and second invention theories will be explained using FIGs.7 and 8. FIG.7 shows a control block diagram an electric power steering apparatus using of a motor drive control apparatus to which the present invention is applied. First, a motor 1 is a brushless DC motor, and is a four-pole three-phase motor. The motor 1 has a rotor (not shown), and Hall sensors 48-1, 48-2, 48-3 as rotor position detecting sensors for detecting the electrical angle of the rotor are disposed through 120° from one another. As a result, the electrical angle $\theta$ of the rotor of the motor 1 can be detected every 60°. When the motor 1 is vector-controlled such that the torque ripple is small, it is necessary to precisely calculate the electrical angle $\theta$ of the rotor. To calculate the current command value from the torque command value Tref, it is necessary to use the electrical angle $\theta$ and angular speed $\omega$ of the rotor.

Current command values Iavref , Ibvref, Icvref calculated at a vector control section 100 are used as reference values, motor currents ia, ib, ic detected by current detectors 32-1, 32-2, 32-3 are respectively fed back, and error currents are respectively obtained at subtracters 20-1, 20-2, 20-3. Voltage command values Vpa, Vpb, Vpc are obtained at a proportional integral (PI) control section 21 which uses the error currents as inputs, and a PWM control section 30 PWM-controls an inverter 31 based on the voltage command values Vpa, Vpb, Vpc. As explained above, it is extremely important to precisely obtain the electrical angle $\theta$ and angular speed $\omega$ of the rotor for controlling the motor 1. The electrical angle $\theta$ and the angular speed $\omega$ are calculated at a rotor position estimating section 200. Thus, the performance of the rotor position estimating section 200 is extremely important, and there is significance for applying the present invention to the rotor position estimating section 200.

FIG.8 is a detailed block diagram of the rotor position estimating section 200 which is an embodiment of the first and second invention theories. A structure thereof will be explained first.

The phase voltages Va, Vb, Vc of the motor detected by the voltage detectors 33-1, 33-2, 33-3, the detected motor currents ia, ib, ic, and the electrical angles $\theta_0$ = 0°, 60°, 120°, 180°, 240°, 300° detected by the Hall sensors 48-1, 48-2, 48-3 are inputted to the rotor position estimating section 200. The mounting position of the electrical angles $\theta_0$ needs not be 0°. For example, if the Hall sensor 48-1 is located at a position of 30°, the electrical angles $\theta_0$ become equal to 30°, 90°, 150°, 210°, 330°. The motor currents ia, ib, ic are respectively inputted to transfer function sections 201-1, 202-2, 202-3. The transfer function is expressed as the following equation (11), and this corresponds to the equation (1) used in the theoretical explanation.

$$Z \;=\; (Rm + s \cdot Lm)/(s \cdot T_f + 1) \qquad \cdot\cdot\cdot(11)$$

wherein, m = a, b, c, and "s" represents Laplace operator.

The numerator of the above equation (11) is an impedance "Rm + s·Lm" multiplied by the motor current of the equation (1). The impedance is multiplied by "1/(s·$T_f$ + 1)" which is a transfer function of a low pass filter that does not exist in the equation (1). The low pass filter is used to eliminate noise included in the motor currents ia, ib, ic, and the use of the low pass filter has practical meaning rather than theoretical meaning.

Outputs of the phase voltages Va, Vb, Vc and the transfer function sections 201-1, 202-2, 202-3 are respectively inputted to the subtracters 202-1, 202-2, 202-3, and if errors are taken, the back-EMFs ea, eb and ec of each phase are calculated. That is, the equation (1) is carried out and the back-EMFs ea, eb and ec of each phase are calculated. In this embodiment, a transfer function section 201-i (i = 1,2,3) and a subtracter 202-i (i = 1,2,3) constitute a "m (m = a,b,c) phase " back-EMF calculating section of each phase. For example, an a-phase back-EMF calculating section comprises the transfer function section 201-1 and the subtracter 202-1.

Next, the back-EMFs ea, eb and ec of each phase are inputted to an angular speed calculating section 203, the equation (2) is carried out and as a result, the angular speed $\omega$ is calculated. Here, as a method for calculating the maximum value of the back-EMF required for the angular speed calculating section 203, there is a method in which an absolute value is taken and multiplied by two as expressed in the equation (2) and the maximum value of the back-EMFs ea, eb and ec is calculated, but as can be judged from FIG. 3, since which the back-EMF becomes the maximum value is already determined depending upon the electrical angle $\theta$, this can be found from the following equation (12) using the electrical angles $\theta_0$ of each 60° detected by the Hall sensors 48.

$$\omega = (ea \times Ca + eb \times Cb + ec \times Cc) \; / \; Ke \qquad \cdots (12)$$

wherein, Ca, Cb and Cc are parameters indicative of commutation, and in the case of the trapezoidal wave and rectangular wave current, [1], [0] or [-1] is taken.

A section where the parameters Ca, Cb and Cc become [1] and a section where the parameters Ca, Cb and Cc become [0] are determined by the electrical angles $\theta_0$, but these sections can be determined by the Hall sensor signals Shall which is a detection signal of the Hall sensors 48. When the angular speed $\omega$ is calculated using the equation (12), the back-EMFs ea, eb and ec and an electrical angle signal $\theta_0$ from a rotor phase detecting section 205 are inputted to the angular speed calculating section 203, and based on these conditions, the parameters Ca, Cb and Cc are determined, the equation (12) is carried out at the angular speed calculating section 203, and then the angular speed $\omega$ is calculated.

Next, an electrical angle calculating section 204 used for obtaining the electrical angle $\theta$ from the angular speed $\omega$ is an integration circuit expressed in the equation (4), the angular speed $\omega$ is inputted and the electrical angle $\theta$ can be calculated.

This is the embodiment of the first invention theory. When there is an error in the electrical angle $\theta$ calculated by the electrical angle calculating section 204, since the error is cumulated in the integration manner, its result is as shown in FIG.4, a precise electrical angle $\theta$ cannot be calculated, and this is not suitable for practical use. In an actual apparatus, errors such as error of parts, errors caused by temperature change, variation with time and detection error are generated in general, and it is common that error is generated in a calculated electrical angle $\theta$.

Hence, using the second invention theory, an error having high probability of generation in the first invention theory is prevented from being cumulated. More specifically, the rotor phase detecting section 205 shown in FIG.8 is used. The Hall sensor signals Shall of the Hall sensors 48-1, 48-2, 48-3 disposed in the motor 1 are used as input, and the electrical angle $\theta_0$ of the rotor is detected. As output, $\theta_0$ = 0°, 60°, 120°, 180°, 240°, 300° are outputted. These detected electrical angles $\theta_0$ are inputted to the electrical angle calculating section 204, and the initial value $\theta_i$ is reset with the electrical angles $\theta_0$ according to the equations (3) and (4). As a result, as shown in FIG.5, the calculated value $\theta$ is 65° while the real value of the electrical angle is 60° and an error of 5° is generated. However, since the detected values $\theta_0$ of the rotor phase detecting section 205 is 60° and the calculated value $\theta$ is reset to 60°, the initial value $\theta_i$ is 60° and the error is reset in the next integration section, i.e., section between the times $T_{60}$ and $T_{120}$, and in this state, the calculation is carried out and thus, errors are not cumulated. Thereafter, the errors are reset every 60° even in the subsequent section such as a section between the times $T_{120}$ and $T_{180}$, and the errors are not cumulated.

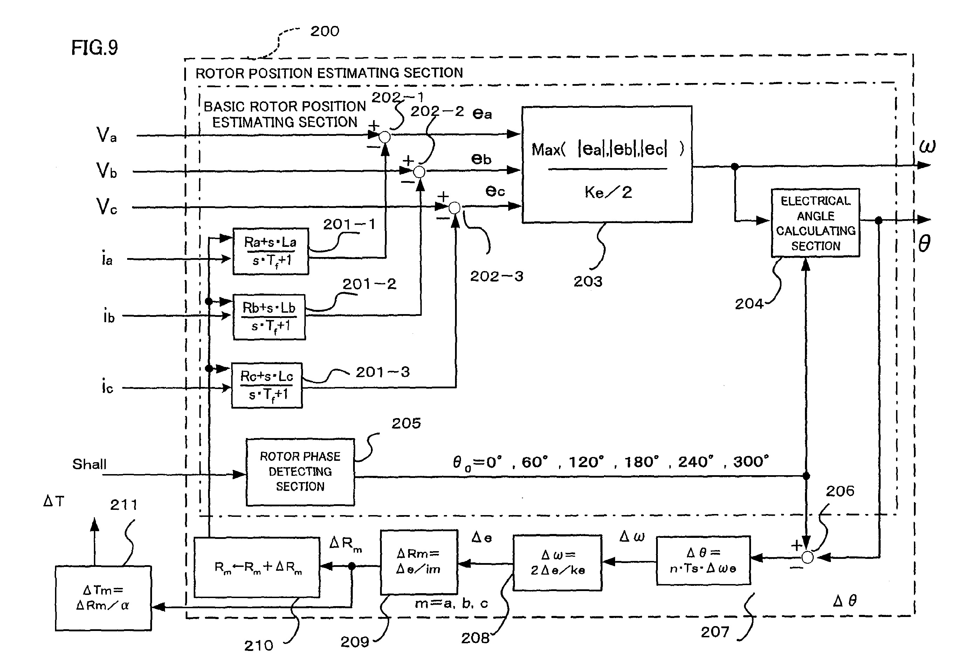

An embodiment of the third invention theory will be explained with reference to FIG.9.

In FIG.9, an error between a detected electrical angle $\theta_0$ and an electrical angle $\theta$ calculated at that time is obtained in the subtracter 206. For example, an error $\Delta\theta$ between the electrical angle $\theta$ at the time $T_{60}$ and the electrical angle $\theta_0$ = 60° is calculated. This means that the equation (5) is carried out. Next, the equation (6) is carried out in the error angular speed detecting section 207. That is, "$\Delta\omega = \Delta\theta/(n \cdot Ts)$" is carried out in the error angular speed detecting section 207, and the error $\Delta\omega$ of the angular speed $\omega$ is calculated from the error $\Delta\theta$ of the electrical angle $\theta$ is calculated. Next, the angular speed error $\Delta\omega$ is used as input by an error back-EMF calculating section 208 for carrying out the equation (7), and a back-EMF error $\Delta e$ is calculated in accordance with the equation (7). Next, in an error resistance calculating section 209, a resistance change amount $\Delta Rm$ of the winding resistance Rm caused by temperature change is calculated from "$\Delta Rm = \Delta e/im$" in accordance with the equation (8). Here, m = a, b and c.

Next, in a resistance correcting section 210, the winding resistance Rm is replaced by "Rm + $\Delta Rm$" in which the resistance change amount $\Delta Rm$ calculated at the error resistance calculating section 209 is taken into consideration. Lastly, new resistance values "Ra = Ra + $\Delta Ra$, Rb = Rb + $\Delta Rb$, Rc = Rc + $\Delta Rc$" calculated at the resistance correcting section 210 are substituted into the resistances Ra, Rb, Rc of the transfer function sections 201-1, 202-2, 202-3, and the angular speed $\omega$ or the electrical angle $\theta$ is newly calculated in accordance with the procedure explained in the second invention theory using a correct resistance value in which the temperature change is taken into consideration. FIG.6 shows the result. As shown in FIG.6, although $\theta$ = 65° at a point A at the time $T_{60}$ and the error is 5° in the second invention theory, $\theta$ = 61° at a point A' at the time $T_{60}$ as shown in FIG. 6, and the error is improved to 1°. That is, the precision of the discrete calculated electrical angle θ in a section between electrical angle $θ_0$ and electrical angle θ detected by the rotor position detecting sensor can largely be enhanced.

Next, an embodiment of the fourth invention theory will be explained with reference to FIG.9. The resistance change amount ΔRm calculated at the error resistance calculating section 209 shown in FIG.9 is inputted to a changed temperature calculating section 211. In the changed temperature calculating section 211, a temperature change amount "ΔT = ΔRm/α" expressed in the equation (11) is carried out, and the temperature change amount ΔT can be calculated. Here, there are three kinds of resistance change amounts ΔRm, i.e., ΔRa, ΔRb, ΔRc. Therefore, there is a possibility that three kinds of temperature change amounts ΔT are generated also, but a maximum value, a minimum value or an average value is selected while taking the purpose of use and the entire apparatus into consideration. For example, if the apparatus is used for protecting it from excessive heat, it is conceived that the maximum value is used for safety. If the temperature change amount ΔT is found, the temperature change amount ΔT can be added to the initial temperature Ta, and winding resistance temperature "Tc = Ta + ΔT" can also be calculated.

In the above-explained embodiment, as apparent from FIG.3, a ripple having small rectifying waveforms of the back-EMFs ea, eb and ec are superimposed on an output waveform of the angular speed calculating section 203. To remove the ripple, it is practical that a low pass filter is disposed behind the angular speed calculating section 203, the ripple is removed and then, it is constituted as the electrical angular speed ω.

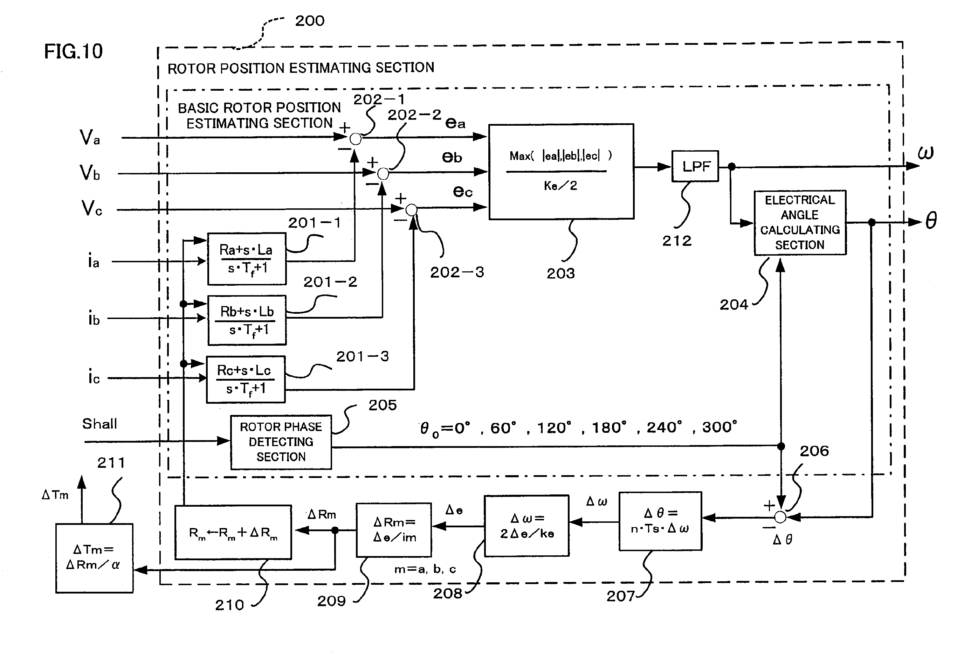

A modification example constituted based on this idea will be explained with reference to FIG.10. A point of this modification example is that a low pass filter (LPF) 212 is disposed in an output of an angular speed calculating section 203a. By the effect of the LPF 212, the electrical angular speed ω and the electrical angle θ are calculated as signals having no ripple. A circuit structure after that is the same as that of the circuit structure shown in FIG. 9, and the angular speed error Δω, the back-EMF error Δe, the resistance value error ΔRm and the temperature change value ΔTm are calculated by the same effect as that explained in FIG.9. In the case of the structure having the LPF, there is effect that a stable calculated value having no variation caused by ripple can be obtained as compared with an apparatus having no LPF.

In the above explanation, the phase voltages Va, Vb, Vc of the motor are used as voltages as explained in FIGs.2 and 8 for obtaining the electrical angle θ, but when a neutral point N of the motor cannot be utilized, the electrical angle θ and the like can be calculated even if the line voltages Vab, Vbc, Vca of the motor are used. That is, theoretically, the following equation (13) should be carried out.

$$\text{eab} = \text{Vab} -[(\text{Ra} + \text{s}\cdot\text{La})\text{ia} - (\text{Rb} + \text{s}\cdot\text{Lb})\text{ib}]$$

$$\text{ebc} = \text{Vbc} -[(\text{Rb} + \text{s}\cdot\text{Lb})\text{ib} - (\text{Rc} + \text{s}\cdot\text{Lc})\text{ic}]$$

$$\text{eca} = \text{Vca} -[(\text{Rc} + \text{s}\cdot\text{Lc})\text{ic} -(\text{Ra} + \text{s}\cdot\text{La})\text{ia}]$$

$$\ldots (13)$$

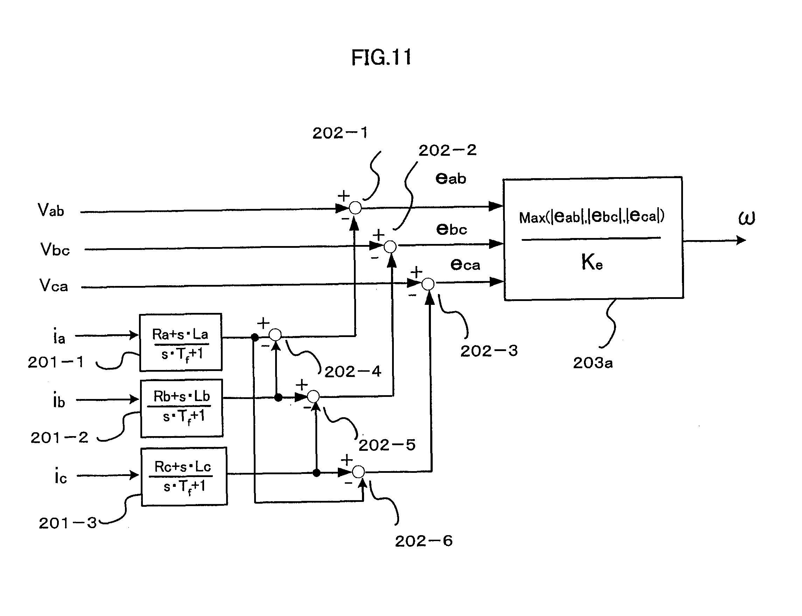

The embodiment will be shown in FIG.11. As compared with FIG.8, subtracters 202-4, 202-5, 202-6 are added, and the line voltages Vab, Vbc, Vca are input values.

In the above explanation, the present invention is applied to a position detecting sensor which is inexpensive but has low resolving power instead of a position detecting sensor having high resolving power such as the encoder and the resolver. However, even with the encoder or resolver having high resolving power, if the rotation speed of the motor is reduced, the number of detected samples is reduced, the detection precision of the rotor position and the angular speed is deteriorated. Therefore, if the present invention is also applied to the encoder or resolver, the detection precision of the rotor position and the angular speed can be enhanced even in a region where the rotation speed of the motor is slow.

As explained above, according to the motor drive control apparatus and the electric power steering apparatus of the present invention, even if an inexpensive rotor position detection sensor is used, it is possible to provide a motor drive control apparatus capable of detecting an electrical angle or an angular speed of a rotor having high precision including a low rotation speed region of the motor and capable of detecting a resistance value and temperature of the motor winding by combining the electrical angle of the rotor calculated from the voltage, current and the like of the motor and the position detecting sensor of the inexpensive rotor.

In an electric power steering apparatus, even if an inexpensive rotor position detecting sensor is used, there is effect that it is possible to provide an inexpensive electric power steering apparatus capable of smoothly following abrupt steering operation of a steering wheel by motor control having small torque ripple using a motor drive control apparatus capable of detecting an electrical angle of a rotor having high precision.

Industrial Applicability

According to a motor drive control apparatus of the present invention, even if an inexpensive rotor position detection sensor having relatively low performance is used, a rotor position can be calculated precisely, and even if there is a low speed region of a motor or temperature change of the motor, the rotor position can be calculated precisely, and it is possible to control rotation of the motor precisely.

The electric power steering apparatus of the invention uses the above-described motor drive control apparatus. Therefore, it is possible to precisely control the rotation of the motor of the electric power steering apparatus, and it is possible to inexpensively provide a steering of a steering wheel having no sense of disharmony even when the steering wheel is abruptly steered in case of emergency.

**Claims**

1. A motor drive control apparatus comprising a voltage detecting section for detecting phase voltage or line voltage of a brushless DC motor having three or more phases, a current detecting section for detecting motor current, a back-EMF detecting section for each phase for calculating a back-EMF of each phase of the motor from the phase voltage or line voltage, the motor current, the winding resistance value and winding inductance value, an angular speed calculating section which detects a back-EMF which becomes a maximum value in the back-EMF of each phase, and which calculates angular speed $\omega$ of a rotor of the motor, and a rotor position estimating section for estimating electrical angle $\theta$ of the rotor from the angular speed $\omega$.

2. A motor drive control apparatus according to claim 1, wherein the rotor position estimating section includes a rotor position detecting section for detecting electrical angles $\theta_0$ of the rotor of the motor in a discrete manner, and the calculated electrical angle $\theta$ is corrected by the detected electrical angles $\theta_0$.

3. A motor drive control apparatus according to claim 1 or 2, wherein the rotor position estimating section calculates a resistance change amount $\Delta R$ caused by temperature change of the winding resistance based on an error $\Delta\theta$ between the calculated electrical angle $\theta$ and the detected electrical angles $\theta_0$.

4. A motor drive control apparatus according to claim 3, wherein the rotor position estimating section calculates a temperature change amount $\Delta T$ of the winding based on the resistance change amount $\Delta R$.

5. A motor drive control apparatus according to claim 3 or 4, wherein the rotor position estimating section corrects the calculated electrical angle $\theta$ of the rotor using the temperature change amount $\Delta T$ or the resistance change amount $\Delta R$.

6. A motor drive control apparatus according to claim 1, further including a low pass filter which is disposed in an input or an output of the current detecting section.

7. An electric power steering apparatus using the motor drive control apparatus according to any one of claims 1 to 6.

FIG.1

# FIG.2

# FIG.3

## FIG.4

PHASE ANGLE θ e CALCULATED
BY A PHASE ESTIMATING SECTION

## FIG.5

CALCULATED PHASE ANGLE θ e CORRECTED
BY A DETECTED PAHSE ANGLE θ 0 OF A HALL SENSOR

## FIG.6

CALCULATED PHASE ANGLE θ e
COMPENSATED WITH TEMPERATURE

## FIG.7

EP 1 612 927 A1

FIG.8

ROTOR POSITION ESTIMATING SECTION

200

BASIC ROTOR POSITION ESTIMATING SECTION

A-PHASE BACK-EMF CALCULATING SECTION

201-1

$$\frac{Ra+s \cdot La}{s \cdot T_f+1}$$

B-PHASE BACK-EMF CALCULATING SECTION

201-2

$$\frac{Rb+s \cdot Lb}{s \cdot T_f+1}$$

C-PHASE BACK-EMF CALCULATING SECTION

201-3

$$\frac{Rc+s \cdot Lc}{s \cdot T_f+1}$$

ROTOR PHASE DETECTING SECTION

205

202-1

202-2

202-3

ea

eb

ec

$$\frac{Max(\ |ea|,|eb|,|ec|\ )}{Ke/2}$$

or

$$(Ca \cdot ea+Cb \cdot eb+Cc \cdot ec)/Ke$$

203

$\omega$

ELECTRICAL ANGLE CALCULATING SECTION

204

$\omega$

$\theta$

$\theta_0 = 0°,\ 60°,\ 120°,\ 180°,\ 240°,\ 300°$

Va

Vb

Vc

ia

ib

ic

Shall

16

FIG.9

FIG.10

# FIG.11

EP 1 612 927 A1

<div style="text-align:center">**INTERNATIONAL SEARCH REPORT**</div>

| | International application No. |
|---|---|
| | PCT/JP2004/004763 |

| A. CLASSIFICATION OF SUBJECT MATTER |
|---|
| Int.Cl⁷ H02P6/18 |

According to International Patent Classification (IPC) or to both national classification and IPC

| B. FIELDS SEARCHED |
|---|
| Minimum documentation searched (classification system followed by classification symbols) |
| Int.Cl⁷ H02P6/18 |

Documentation searched other than minimum documentation to the extent that such documents are included in the fields searched

| Jitsuyo Shinan Koho | 1922–1996 | Toroku Jitsuyo Shinan Koho | 1994–2004 |
|---|---|---|---|
| Kokai Jitsuyo Shinan Koho | 1971–2004 | Jitsuyo Shinan Toroku Koho | 1996–2004 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y<br>A | JP 2003-33070 A (LG Electronics Inc.),<br>31 January, 2003 (31.01.03),<br>Page 3; Par. Nos. [0002] to [0010]<br>(Family: none) | 1,6,7<br>2<br>3-5 |
| Y | JP 9-19184 A (Matsushita Electric Industrial Co., Ltd.),<br>17 January, 1997 (17.01.97),<br>& US 5729102 A | 2 |

☐ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 12 July, 2004 (12.07.04) | 27 July, 2004 (27.07.04) |

| Name and mailing address of the ISA/<br>Japanese Patent Office | Authorized officer |
|---|---|
| Facsimile No. | Telephone No. |

Form PCT/ISA/210 (second sheet) (January 2004)